# EUROPEAN PATENT APPLICATION

(11) **EP 4 075 392 A1**
(43) Date of publication of application: **19.10.2022**
(21) Application number: 20899817.9
(22) Date of filing: 12.11.2020
(51) Int. Cl.: G06T 19/00

(54) **INFORMATION PROCESSING SYSTEM, INFORMATION PROCESSING METHOD, AND PROGRAM**

(30) Priority: 10.12.2019 JP 2019223184
(71) Applicant: Sony Group Corporation, Tokyo 108-0075 (JP)
(72) Inventor: ESHIMA, Masashi, Tokyo 108-0075 (JP); KATO, Takaaki, Tokyo 108-0075 (JP)
(74) Representative: MFG Patentanwälte Meyer-Wildhagen Meggle-Freund Gerhard PartG mbB
(86) International application number: PCT/JP2020/042345
(87) International publication number: WO 2021/117415

(57) **Abstract**

An information processing system (1) includes a first acquisition unit (201) that acquires position attitude information indicating a position and attitude of a first device (10) in a real space, an identification unit (203) that identifies a position of a virtual camera provided in a virtual space associated with the real space, based on the position attitude information, a correction unit (207 and 210) that corrects an imaging range (A) of the camera in the position and an attitude, identified by the identification unit (203), based on a terrain in the virtual space, and a video generation unit (212) that generates a video of the virtual space corresponding to the imaging range (A).

## Description

### Field

The present disclosure relates to an information processing system, an information processing method, and a program.

### Background

Three-dimensional video using three-dimensional image data such as computer graphics (CG) has been widely used. For such a three-dimensional video, a three-dimensional video having good camerawork and appearing as if to be taken by a camera operator has been demanded. However, in the three-dimensional video, it is difficult to show the video appearing as if the video was taken by the camera operator because it is necessary to generate three-dimensional translation and rotation information.

Here, a technology has been developed to generate a three-dimensional video showing the inside of a virtual space appearing as if to be taken by a virtual camera that is an imaginary camera and is arranged in the virtual space created by three-dimensional image data. Such a virtual camera makes it possible to generate a three-dimensional video with highly realistic camerawork by using a device serving as the virtual camera, held and operated by the camera operator.

### Citation List

### Patent Literature

Patent Literature 1: JP 2014-197317 A

### Summary

### Technical Problem

However, the virtual camera held and operated by the camera operator actually requires preparation, such as creation of a scene set or planning location, on the basis of a terrain in the virtual space, and it has been cumbersome.

Therefore, the present disclosure proposes an information processing system, an information processing method, and a program that are configured to generate a three-dimensional video on the basis of a terrain in a virtual space.

### Solution to Problem

To solve the problems described above, an information processing system according to the present disclosure includes: a first acquisition unit that acquires position attitude information indicating a position and attitude of a first device in a real space; an identification unit that identifies a position of a virtual camera provided in a virtual space associated with the real space, based on the position attitude information; a correction unit that corrects an imaging range of the camera in the position and an attitude, identified by the identification unit, based on a terrain in the virtual space; and a video generation unit that generates a video of the virtual space corresponding to the imaging range.

### Brief Description of Drawings

FIG. 1 is a diagram illustrating an example of a configuration of an information processing system according to a first embodiment of the present disclosure.
FIG. 2 is a diagram illustrating an example of a movement trajectory of a virtual camera according to the first embodiment.
FIG. 3 is a diagram illustrating an example of a movement trajectory of the virtual camera according to the first embodiment.
FIG. 4 is a diagram illustrating an example of a schematic configuration of an imaging device according to the first embodiment of the present disclosure.
FIG. 5 is a diagram illustrating an example of a schematic configuration of a three-dimensional video generation device according to the first embodiment of the present disclosure.
FIG. 6 is a flowchart illustrating an example of a three-dimensional video generation process according to the first embodiment.
FIG. 7 is a diagram illustrating an example of correction of a virtual space along with the movement of the virtual camera.
FIG. 8 is a diagram illustrating an example of the correction of the virtual space along with the movement of the virtual camera.
FIG. 9 is a diagram illustrating an example of the correction of the virtual space along with the movement of the virtual camera.
FIG. 10 is a diagram illustrating an example of a schematic configuration of a three-dimensional video generation device according to a first modification of the first embodiment of the present disclosure.
FIG. 11 is a diagram illustrating an example of a movement trajectory of the virtual camera.
FIG. 12 is a diagram illustrating an example of the movement trajectory of the virtual camera.
FIG. 13 is a diagram illustrating an example of the movement trajectory of the virtual camera.
FIG. 14 is a diagram illustrating an example of a processing block of a three-dimensional video generation device according to a second embodiment of the present disclosure.
FIG. 15 is a diagram illustrating an example of a movement trajectory of the virtual camera.
FIG. 16 is a diagram illustrating an example of the movement trajectory of the virtual camera.
FIG. 17 is a diagram illustrating an example of the movement trajectory of the virtual camera.
FIG. 18 is a diagram illustrating an example of a schematic configuration of a three-dimensional video generation device according to a first modification of the second embodiment of the present disclosure.
FIG. 19 is a diagram illustrating an example of a configuration of an information processing system according to a third embodiment of the present disclosure.
FIG. 20 is a diagram illustrating an example of a schematic configuration of a three-dimensional video generation device according to the third embodiment of the present disclosure.
FIG. 21 is a diagram illustrating an example of a configuration of an imaging device according to a fourth embodiment of the present disclosure.
FIG. 22 is a diagram illustrating an example of a configuration of an imaging device according to a first modification of the fourth embodiment of the present disclosure.
FIG. 23 is a flowchart illustrating an example of a reference height setting process according to the first modification of the fourth embodiment.
FIG. 24 is a diagram illustrating an example of an imaging request screen according to the first modification of the fourth embodiment.
FIG. 25 is a diagram illustrating an example of the imaging request screen according to the first modification of the fourth embodiment.
FIG. 26 is a diagram illustrating an example of gravity direction images according to a fifth embodiment.
FIG. 27 is a diagram illustrating an example of a configuration of a three-dimensional video generation device according to the fifth embodiment of the present disclosure.
FIG. 28 is a block diagram illustrating a hardware configuration of a computer according to an embodiment of the present disclosure.

### Description of Embodiments

The embodiments of the present disclosure will be described in detail below with reference to the drawings. Note that in the following embodiments, the same portions are denoted by the same reference numerals or symbols, and a repetitive description thereof will be omitted.

### [First Embodiment]

Recent movies and the like often use three-dimensional videos using three-dimensional image data such as computer graphics (CG). For such a three-dimensional video, a three-dimensional video having good camerawork and appearing as if to be taken by a camera operator has been demanded. However, in order to generate the three-dimensional video having good camerawork and appearing as if to be taken by a camera operator, it is necessary to generate three-dimensional translation and rotation information at all times. Therefore, it is very difficult to generate a video appearing as if to be taken by an actual camera operator.

Meanwhile, a technology has been developed to generate a three-dimensional video showing the inside of a virtual space appearing as if to be taken by a virtual camera that is an imaginary camera and is arranged in the virtual space created by three-dimensional image data.

In a virtual camera system, rendering of the virtual space within an imaging range of the virtual camera makes it possible to generate the three-dimensional video showing the inside of the virtual space appearing as if to be taken by the camera. Furthermore, in the virtual camera system, the camera operator holds and operates the device serving as the virtual camera, enabling generation of the three-dimensional video having highly realistic camerawork.

Here, "Unreal Engine Virtual Camera Plugin" is known as a technology of generating the three-dimensional video of the virtual space from a three-dimensional position and an attitude of the device.

These technologies are implemented using a Motion Capture system that detects device motion. For example, a so-called Outside-in method is used for the implementation, in which the three-dimensional position and attitude of the device are recognized by using a sensor or camera installed in an imaging environment in advance. However, in the Outside-in method, a self-position and an attitude of the device cannot be recognized outside the imaging environment in which the sensor, camera, and the like are installed. Therefore, performance of imaging is limited to the inside of the imaging environment.

Therefore, advance to a so-called Inside-out method that does not limit the imaging environment is expected. In the Inside-out method, a sensor or camera for recognizing the self-position and the attitude is mounted to the device. As described above, in the Inside-out method, the sensor or the camera mounted to the device prevents limitation of the imaging environment.

However, in the virtual camera system, in any of the Outside-in method and the Inside-out method, the device held and operated by the camera operator generates the three-dimensional video having good camerawork and appearing as if to be captured by the camera operator. Then, the camera operator is required to make a movement on the basis of a terrain in the virtual space.

For example, in a case where it is desired to generate the three-dimensional video having camerawork appearing as if to climb a slope by using the virtual camera system, a scene set or the like imitating a slope is required. If imaging is performed at a flat place without preparing the scene set imitating a slope, the camera operator moves on a flat surface in the real space, whereas the virtual space is provided with the slope, so that the virtual camera system generates a three-dimensional video appearing as if to sink into a slope.

As described above, when there is a difference between the terrain in the real space and the terrain in the virtual space, the virtual camera system generates an unintended three-dimensional video. Therefore, in the virtual camera system, it is necessary to capture a video at the scene set imitating the same slope as the terrain in the virtual space or on location with a slope, thus, increasing the cost and effort required for imaging. Therefore, there is a demand for a technology that eliminates the need for imaging at the scene set or imaging on location.

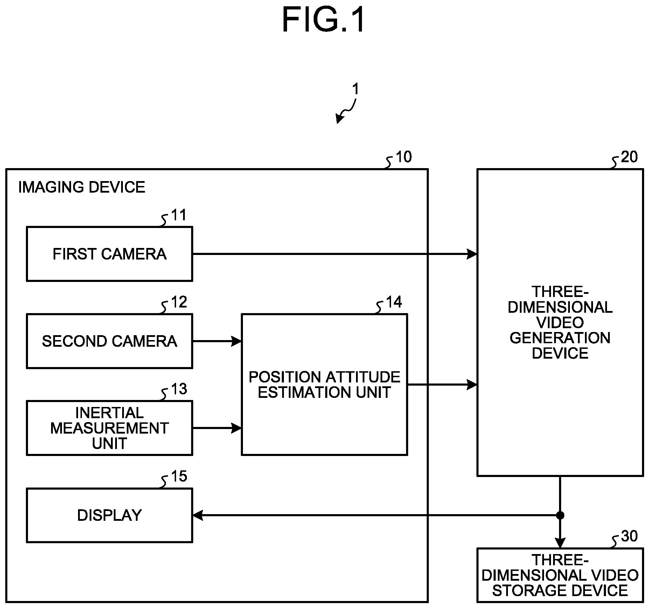

FIG. 1 is a diagram illustrating an example of a configuration of an information processing system 1 according to a first embodiment of the present disclosure. The information processing system 1 includes an imaging device 10, a three-dimensional video generation device 20, and a three-dimensional video storage device 30.

The imaging device 10 estimates the self-position and attitude estimated by Simultaneous Localization and Mapping (SLAM). The imaging device 10 is a device that identifies a region where the three-dimensional video is generated in the virtual space, on the basis of a result of the estimation. In other words, the imaging device 10 is a device that identifies the imaging range of the virtual camera in the virtual space.

The imaging device 10 includes a first camera 11, a second camera 12, an inertial measurement unit (IMU) 13, a position attitude estimation unit 14, and a display 15.

The first camera 11 is a camera that images an object in a real space. The imaging device 10 images the object in the real space to generate the three-dimensional video in which the imaged object in the real space is superimposed. The first camera 11 generates a first camera image that is image data captured by the first camera 11. Note that the imaging device 10 may not include the first camera 11 when it is not necessary to image the object in the real space.

The second camera 12 is a camera that captures an image used for estimation of the self-position, the attitude, and the like of the imaging device 10. The second camera 12 generates a second camera image that is image data captured by the second camera 12.

The inertial measurement unit 13 is a device that includes various sensors measuring a motion state of the imaging device 10. For example, the inertial measurement unit 13 measures angular velocity, acceleration, and the like. Then, the inertial measurement unit 13 generates IMU information including the angular velocity, the acceleration, and the like.

The position attitude estimation unit 14 recognizes the self-position, attitude, and gravity direction of the imaging device 10, on the basis of map information indicating the environment around the imaging device 10, the second camera image, and the IMU information. The self-position is information indicating a horizontal position and a vertical position of the imaging device 10. The attitude is information indicating the inclination of the imaging device 10 represented by a yaw angle, a roll angle, and a pitch angle. The gravity direction is information indicating a direction of the gravity applied to the imaging device 10. In other words, the gravity direction is information indicating a direction downward from the imaging device 10 in the vertical direction. Then, the position attitude estimation unit 14 generates position attitude information indicating the self-position, attitude, and gravity direction of the imaging device 10.

The display 15 displays the three-dimensional video of the virtual space included in the imaging range of the virtual camera. In other words, the display 15 displays the three-dimensional video generated by the three-dimensional video generation device 20. Therefore, the camera operator can grasp whether he/she is taking a video of which position in the virtual space.

The three-dimensional video generation device 20 generates the three-dimensional video of the virtual space corresponding to the imaging range of the virtual camera provided in the virtual space, on the basis of the position attitude information output from the imaging device 10. Then, the three-dimensional video generation device 20 transmits the generated three-dimensional video to the imaging device 10 and the three-dimensional video storage device 30.

The three-dimensional video storage device 30 stores the three-dimensional video generated by the three-dimensional video generation device 20.

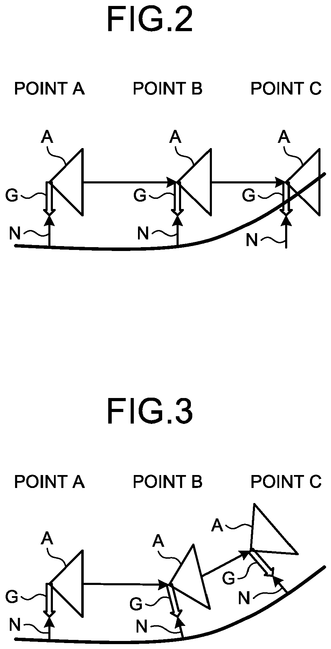

Next, generation of the three-dimensional video according to the first embodiment will be described. FIG. 2 is a diagram illustrating an example of a movement trajectory of the virtual camera according to the first embodiment. FIG. 3 is a diagram illustrating an example of the movement trajectory of the virtual camera according to the first embodiment.

The movement trajectory illustrated in FIG. 2 indicates a movement trajectory in a case where an imaging range A of the virtual camera is not corrected. On the other hand, the movement trajectory illustrated in FIG. 3 indicates a movement trajectory in a case where the imaging range A of the virtual camera is corrected. In FIGS. 2 and 3, it is assumed that the ground has an inclination. Furthermore, it is assumed that the camera operator moves substantially horizontally in the real space.

In a case where the terrain of the imaging location in the real space is substantially horizontal, the camera operator moves substantially horizontally. Therefore, as illustrated in FIG. 2, in a case of no correction, the imaging range A of the virtual camera moves substantially horizontally at point A, point B, and point C.

Here, as illustrated in FIG. 2, in a case where the terrain in the virtual space is uphill, the imaging range A of the virtual camera gradually increases in height and is tilted upward. However, in a case where the moving direction of the camera operator in the real space is the horizontal direction, the height and attitude of the virtual camera do not change. For this reason, as illustrated in FIG. 2, an actually inconceivable state such as sinking into the ground occurs.

Therefore, as illustrated in FIG. 3, in the three-dimensional video generation device 20, the height and attitude of the imaging range A of the virtual camera are corrected. More specifically, the three-dimensional video generation device 20 corrects the height of the imaging range A on the basis of the height at which the imaging range A is present in the virtual space. Furthermore, for the attitude of the imaging range A, the three-dimensional video generation device 20 makes a gravity vector and a normal vector substantially parallel with each other to correct the attitude. The gravity vector indicates the gravity direction of the imaging device 10 and the normal vector indicates a normal direction normal to the terrain in the virtual space.

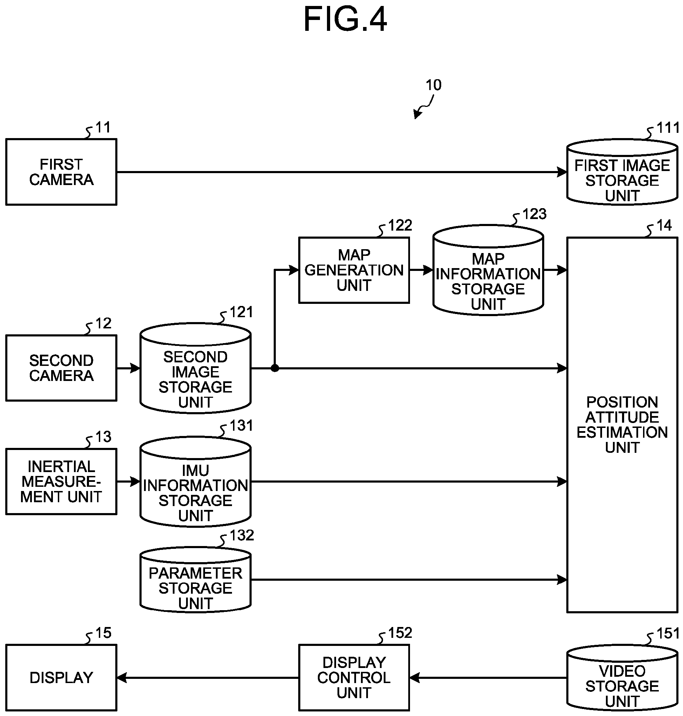

Next, a schematic configuration of each device of the information processing system 1 according to the first embodiment will be described. Here, FIG. 4 is a diagram illustrating an example of a schematic configuration of the imaging device 10 according to the first embodiment of the present disclosure.

A first image storage unit 111 is a storage unit that stores the first camera image captured by the first camera 11. Then, the first image storage unit 111 transmits the first camera image to the three-dimensional video generation device 20.

A second image storage unit 121 is a storage unit that stores the second camera image captured by the second camera 12.

An IMU information storage unit 131 stores the IMU information generated by the inertial measurement unit 13.

A parameter storage unit 132 stores parameter information such as parameter values indicating settings of the second camera 12 and the inertial measurement unit 13. For example, the setting of the second camera 12 includes setting related to the imaging range A such as an angle of view. The setting of the inertial measurement unit 13 includes information such as noise of the inertial measurement unit 13 and a position where the inertial measurement unit 13 is mounted.

A map generation unit 122 generates the map information indicating the environment around the imaging device 10, on the basis of the second camera image. The map information is information used for SLAM. Then, the map generation unit 122 causes a map information storage unit 123 to store the generated map information. In addition, the map generation unit 122 appropriately performs update such as optimization processing on the map information stored in the map information storage unit 123. Note that the map generation unit 122 may generate the map information on the basis of not only the second camera image but also the second camera image and the IMU information, or may generate the map information on the basis of other information.

The position attitude estimation unit 14 estimates the position, attitude, and the gravity direction of the imaging device 10 in the real space, on the basis of the map information, the second camera image, the IMU information, and the parameter information. In a case where the position and the attitude are estimated, the position attitude estimation unit 14 generates the position attitude information indicating the position and attitude of the imaging device 10. Then, the position attitude estimation unit 14 transmits the position attitude information to the three-dimensional video generation device 20.

When receiving the three-dimensional video from the three-dimensional video generation device 20, a video storage unit 151 stores the three-dimensional video. A display control unit 152 causes the display 15 to display the three-dimensional video stored in the video storage unit 151.

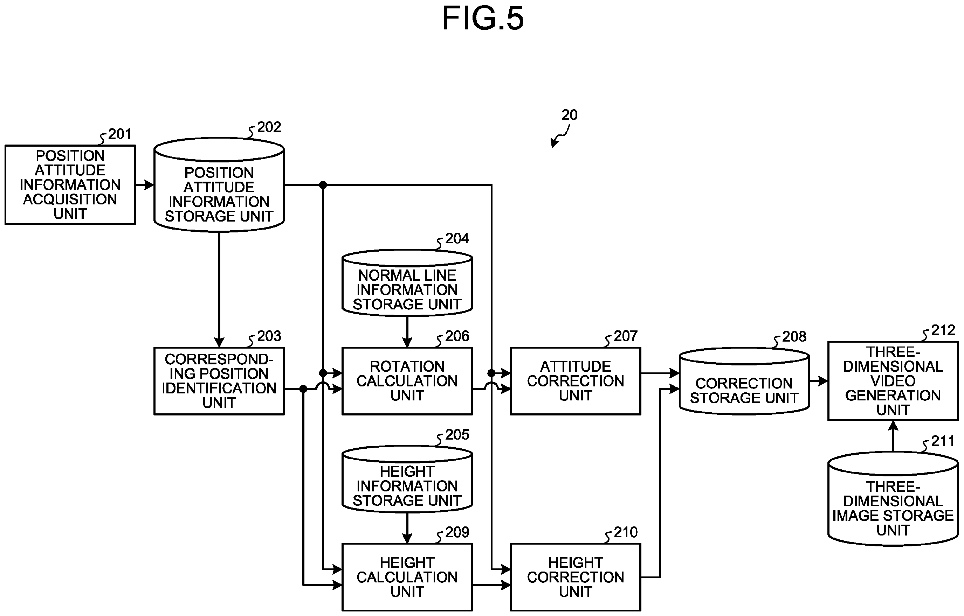

FIG. 5 is a diagram illustrating an example of a schematic configuration of the three-dimensional video generation device 20 according to the first embodiment of the present disclosure.

A position attitude information acquisition unit 201 acquires the position attitude information indicating the position and attitude of the imaging device 10 in the real space. The position attitude information acquisition unit 201 causes a position attitude information storage unit 202 to store the position attitude information acquired from the imaging device 10.

A corresponding position identification unit 203 identifies the position and attitude of the virtual camera provided in the virtual space associated with the real space, on the basis of the position attitude information. Specifically, the corresponding position identification unit 203 identifies a horizontal position in the virtual space corresponding to the position of the imaging device 10 in the real space. In other words, the corresponding position identification unit 203 identifies the current position of the virtual camera in the virtual space.

A normal line information storage unit 204 stores a normal vector N indicating the normal direction normal to the ground at each position, for each position in the virtual space. A height information storage unit 205 stores height information indicating a height of the ground at each position, for each position in the virtual space.

A rotation calculation unit 206 calculates a rotation amount to make the gravity direction parallel with the normal direction, on the basis of the gravity direction of the imaging device 10 in the real space and the normal direction indicated by the normal vector N at the current position in the virtual space. In other words, the rotation calculation unit 206 calculates whether the gravity direction and the normal direction are made parallel when how many degrees the virtual camera is tilted.

More specifically, the rotation calculation unit 206 acquires the normal vector N at the horizontal position in the virtual space identified by the corresponding position identification unit 203 from the normal line information storage unit 204. Then, the rotation calculation unit 206 compares the normal vector N acquired from the normal line information storage unit 204 with the gravity direction indicated by the position attitude information to calculate the rotation amount.

An attitude correction unit 207 and a height correction unit 210 correct the imaging range A of the virtual camera at the position identified by the corresponding position identification unit 203, on the basis of the terrain in the virtual space. For example, the attitude correction unit 207 and the height correction unit 210 correct the position and attitude of the virtual camera to correct the imaging range A of the virtual camera.

The attitude correction unit 207 corrects the inclination of the imaging range A of the virtual camera. For example, the attitude correction unit 207 corrects the imaging range A of the virtual camera to have inclination at which the gravity direction of the virtual camera is parallel to the normal direction normal to the terrain in the virtual space. More specifically, the attitude correction unit 207 rotates the virtual camera by the rotation amount calculated by the rotation calculation unit 206. Therefore, the attitude correction unit 207 makes the gravity direction and the normal direction parallel with each other. Then, the attitude correction unit 207 causes a correction storage unit 208 to store the corrected attitude of the virtual camera.

The correction storage unit 208 stores the attitude of the virtual camera corrected by the attitude correction unit 207 and the height of the virtual camera corrected by the height correction unit 210.

A height calculation unit 209 calculates a difference between the height of the virtual camera at a starting position and the height of the current position of the virtual camera, in the virtual space. Here, the height of the virtual camera at the starting position in the virtual space is a reference height of the virtual camera. In other words, the height calculation unit 209 calculates whether how much the height of the virtual camera has changed from the start to the present. More specifically, the height calculation unit 209 acquires the height in the virtual space identified by the corresponding position identification unit 203, from the height information storage unit 205. Then, the height calculation unit 209 calculates a difference between the height information acquired from the height information storage unit 205 and the height of the virtual camera at the starting position, in the virtual space.

Furthermore, the height calculation unit 209 may add a change in height of the imaging device 10 indicated by the position attitude information to the calculated difference. The imaging device 10 in the real space is changed to any height by the camera operator. The height calculation unit 209 adds the change in height of the imaging device 10 indicated by the position attitude information to the difference calculated by the height calculation unit 209. Thereby the three-dimensional video according to the height specified by the camera operator can be generated.

The height correction unit 210 corrects the height of the imaging range A of the virtual camera. For example, the height correction unit 210 adds a change in height of the terrain in the virtual space to correct the height of the imaging range A of the virtual camera. More specifically, the height correction unit 210 corrects the height of the virtual camera, on the basis of the current height of the imaging device 10 in the real space and a height indicated by the difference calculated by the height calculation unit 209. Thereby, the height correction unit 210 sets the virtual camera to a height according to the terrain in the virtual space at the current position. Then, the height correction unit 210 causes the correction storage unit 208 to store the corrected height of the virtual camera.

A three-dimensional image storage unit 211 stores the three-dimensional image data constituting the virtual space. The three-dimensional image data may include point group data, such as point cloud, and further include a polygon mesh, texture, volumetric data that is obtained by replacing a space with three-dimensional data, and other data.

A three-dimensional video generation unit 212 generates a video of the virtual space corresponding to the imaging range A of the virtual camera. More specifically, the three-dimensional video generation unit 212 generates the three-dimensional video of the virtual space included in the imaging range A of the virtual camera by rendering or the like, on the basis of the corrected attitude and height stored in the position attitude information storage unit 202. Then, the three-dimensional video generation unit 212 outputs the generated video to the display 15 and the three-dimensional video storage device 30.

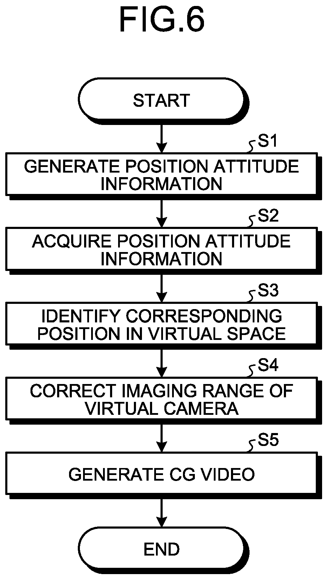

Next, a three-dimensional video generation process performed by the information processing system 1 according to the first embodiment will be described. FIG. 6 is a flowchart illustrating an example of the three-dimensional video generation process according to the first embodiment.

The position attitude estimation unit 14 of the imaging device 10 generates the position attitude information indicating the position and attitude of the imaging device 10 (Step S1).

The position attitude information acquisition unit 201 of the three-dimensional video generation device 20 acquires the position attitude information generated by the imaging device 10 (Step S2).

The corresponding position identification unit 203 of the three-dimensional video generation device 20 identifies the position of the virtual space corresponding to the position of the real space indicated by the position attitude information (Step S3).

The three-dimensional video generation device 20 corrects the imaging range A of the virtual camera (Step S4). More specifically, the rotation calculation unit 206 calculates the rotation between the gravity vector and the normal vector. Furthermore, the attitude correction unit 207 rotates the virtual camera by the rotation amount calculated by the rotation calculation unit 206. Furthermore, the height calculation unit 209 calculates a difference between the height of the starting position and the height of the ground at the current position, in the virtual space. The height correction unit 210 corrects the height of the virtual camera according to the difference calculated by the height calculation unit 209. Therefore, the three-dimensional video generation device 20 corrects the imaging range A of the virtual camera.

The three-dimensional video generation unit 212 generates the three-dimensional video of the virtual space included in the corrected imaging range A (Step S5).

Thus, the information processing system 1 finishes the three-dimensional video generation process.

As described above, in the information processing system 1 according to the first embodiment, the three-dimensional video generation device 20 corrects the imaging range A of the virtual camera at the position identified by the corresponding position identification unit 203, on the basis of the terrain in the virtual space. Therefore, the three-dimensional video generation device 20 is configured to generate the three-dimensional video according to the terrain in the virtual space without creation of the scene set or planning location.

### [First Modification of First Embodiment]

In the first embodiment, the height and attitude of the virtual camera are changed to match the imaging device 10 in the real space with the virtual camera in the virtual space. In a first modification, the height in the virtual space and the attitude of the virtual space are corrected to match the imaging device 10 in the real space with the virtual camera in the virtual space.

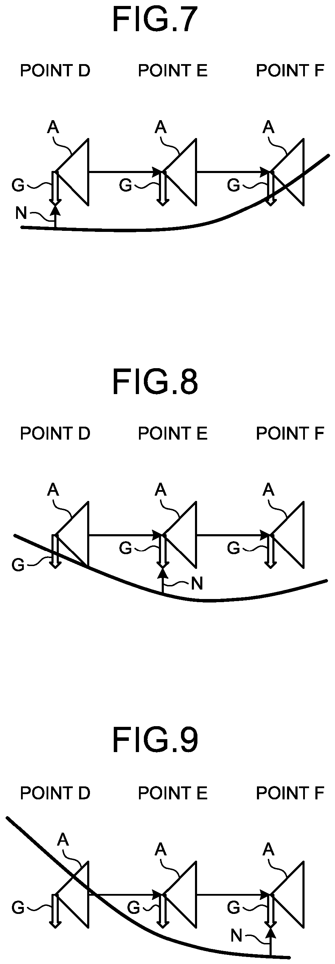

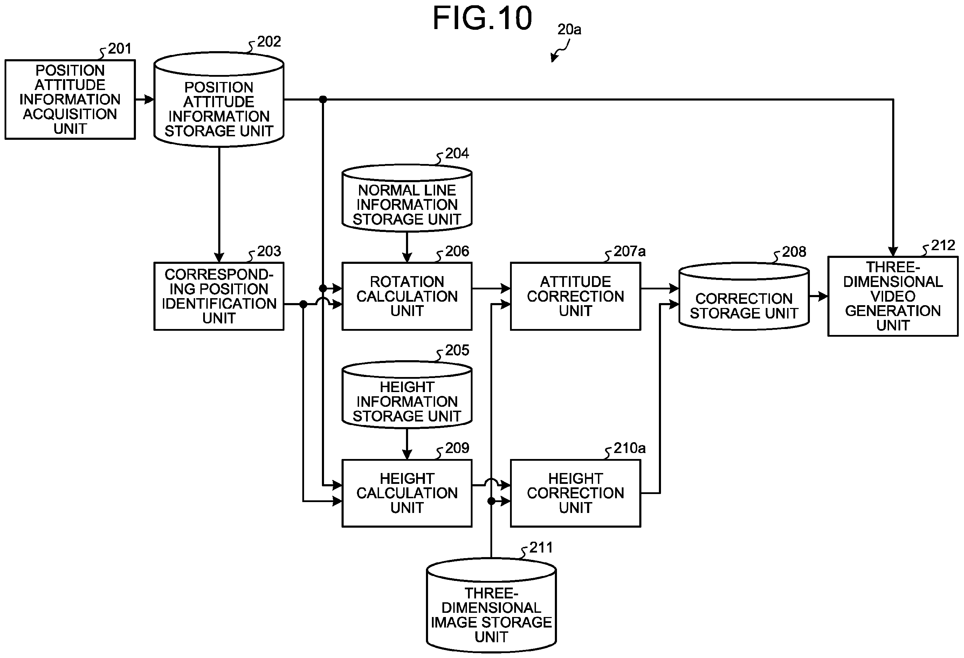

Next, three-dimensional video generation by a three-dimensional video generation device 20a (see FIG. 10) according to the first modification of the first embodiment will be described. Here, an example of the virtual space that shows going up a slope will be described with reference to FIGS. 7 to 9. FIG. 7 is a diagram illustrating an example of correction of the virtual space along with the movement of the virtual camera. FIG. 8 is a diagram illustrating an example of the correction of the virtual space along with the movement of the virtual camera. FIG. 9 is a diagram illustrating an example of the correction of the virtual space along with the movement of the virtual camera. Furthermore, in FIGS. 7 to 9, it is assumed that the camera operator moves substantially horizontally in the real space.

At point D illustrated in FIG. 7, both the real space and the virtual space are horizontal, and therefore, the three-dimensional video generation device 20a does not change the height in the virtual space and tilt the attitude of the virtual space.

Furthermore, point E illustrated in FIG. 8 is a position at the foot of a slope, and the ground in the virtual space has an inclination. Therefore, the three-dimensional video generation device 20a tilts the virtual space so that the gravity vector G of the virtual camera is parallel to the normal vector N in the virtual space.

Point F illustrated in FIG. 9 is in the middle of a slope, and the ground in the virtual space has an inclination. Therefore, the three-dimensional video generation device 20a tilts the virtual space so that the gravity vector G of the virtual camera is parallel to the normal vector N in the virtual space. Furthermore, the point F illustrated in FIG. 9 is higher than the point D illustrated in FIG. 7. Therefore, the three-dimensional video generation device 20a lowers the height in the virtual space so as to match the height of the imaging device 10.

Next, a schematic configuration of the three-dimensional video generation device 20a according to the first modification of the first embodiment will be described. Here, FIG. 10 is a diagram illustrating an example of a schematic configuration of the three-dimensional video generation device 20a according to the first modification of the first embodiment of the present disclosure.

The position attitude information acquisition unit 201 acquires the position attitude information from the imaging device 10, as in the first embodiment. Furthermore, the position attitude information acquisition unit 201 stores the position attitude information in the position attitude information storage unit 202. Furthermore, the corresponding position identification unit 203 identifies the current position on a virtual track corresponding to the real space indicated by the position attitude information.

As in the first embodiment, the rotation calculation unit 206 calculates the rotation amount to make the gravity direction and the normal direction parallel, on the basis of the gravity direction of the imaging device 10 in the real space and the normal direction indicated by the normal vector N at the position in the virtual space corresponding to the imaging device 10.

An attitude correction unit 207a and a height correction unit 210a correct the position in the virtual space and the attitude of the virtual space to correct the imaging range A of the virtual camera.

The attitude correction unit 207a rotates the virtual space by the rotation amount calculated by the rotation calculation unit 206. Therefore, the attitude correction unit 207a makes the gravity direction and the normal direction parallel with each other. Then, the attitude correction unit 207a causes the correction storage unit 208 to store the corrected attitude of the virtual space.

As in the first embodiment, the height calculation unit 209 calculates a difference between the height of the starting position and the height of the ground at the current position, in the virtual space. Furthermore, the height calculation unit 209 may add the height of the imaging device 10 indicated by the position attitude information.

The height correction unit 210a corrects the height in the virtual space on the basis of the value calculated by the height calculation unit 209. Thereby, the height correction unit 210a sets the virtual space to a height according to the terrain in the virtual space. Then, the height correction unit 210a causes the correction storage unit 208 to store the corrected height in the virtual space.

The correction storage unit 208 stores the attitude of the virtual space corrected by the attitude correction unit 207a and the height in the virtual space corrected by the height correction unit 210a.

The three-dimensional video generation unit 212 generates the three-dimensional video of the virtual space on the basis of the attitude of the virtual space and the height in the virtual space, stored in the correction storage unit 208. More specifically, the three-dimensional video generation unit 212 identifies the virtual space included in the imaging range A of the virtual camera, in the virtual space positioned at the attitude and height stored in the position attitude information storage unit 202. Furthermore, the three-dimensional video generation unit 212 generates the three-dimensional video of the virtual space included in the imaging range A of the virtual camera. Then, the three-dimensional video generation unit 212 outputs the generated video to the display 15 and the three-dimensional video storage device 30.

As described above, in an information processing system 1a according to the first modification of the first embodiment, the three-dimensional video generation device 20a corrects the attitude of the virtual space and the height in the virtual space to correct the imaging range A of the virtual camera at the position identified by the corresponding position identification unit 203. Therefore, the three-dimensional video generation device 20a is configured to generate the three-dimensional video according to the terrain in the virtual space without creating the scene set or planning location.

### [Second Embodiment]

In the first embodiment, the height and the attitude are corrected to match the imaging device 10 in the real space with the virtual camera in the virtual space. In the second embodiment, the height is corrected without correcting the attitude.

Incidentally, the camera operator can freely determine whether to capture a video of which place in the virtual space. For example, the camera operator may capture a video of the ground or sky in the virtual space, in some cases. However, in the first embodiment, the further correction of the attitude requires complicated operation of further tilting the imaging device 10 by the camera operator in consideration of the correction of the attitude. Therefore, in the second embodiment, the height is corrected without correcting the attitude.

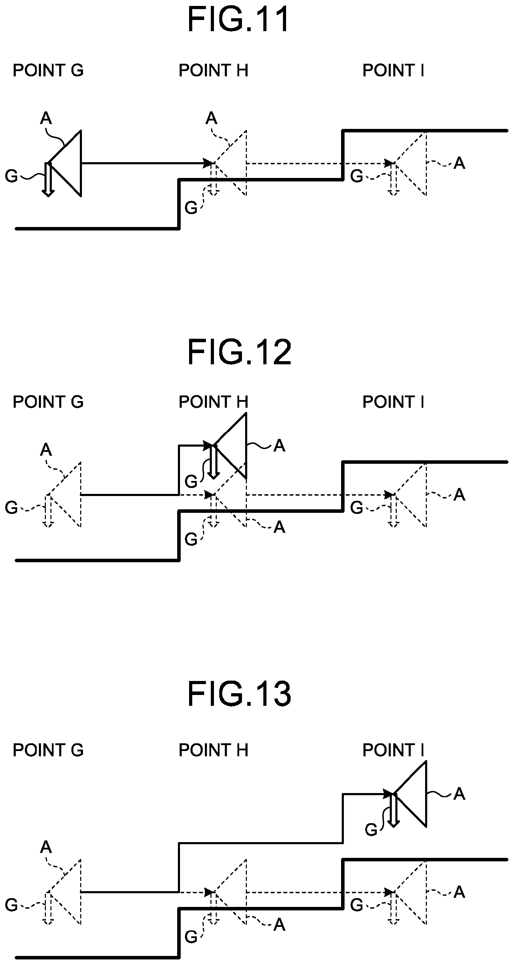

FIG. 11 is a diagram illustrating an example of a movement trajectory of the virtual camera. FIG. 12 is a diagram illustrating an example of the movement trajectory of the virtual camera. FIG. 13 is a diagram illustrating an example of the movement trajectory of the virtual camera. FIGS. 11 to 13 illustrate movement in a stepwise virtual space. Furthermore, in FIGS. 11 and 13, it is assumed that the camera operator moves substantially horizontally in the real space.

In FIGS. 11 to 13, a dotted line indicates a trajectory of movement of the imaging device 10 in the real space. On the other hand, a solid line indicates a trajectory of the movement of the virtual camera in the virtual space. As illustrated in FIGS. 11 to 13, the imaging device 10 is not tilted in the real space. Therefore, the attitude of the virtual camera is not tilted when moving on the stairs in the virtual space. Furthermore, in the second embodiment, the attitude of the virtual camera is not tilted according to the terrain in the virtual space. Therefore, even when the virtual space has the slope, the attitude of the virtual camera is not tilted. Meanwhile, the height changes for each stair step in the virtual space. Therefore, the height of the virtual camera is corrected for each stair step.

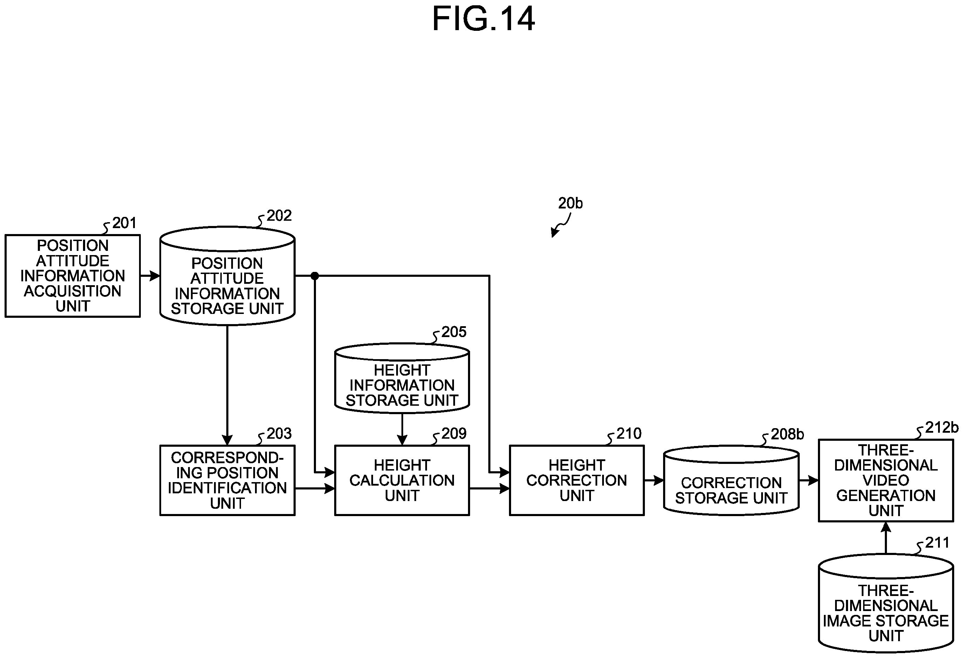

Next, a process performed by a three-dimensional video generation device 20b according to the second embodiment will be described. FIG. 14 is a diagram illustrating an example of a processing block of the three-dimensional video generation device 20b according to the second embodiment of the present disclosure.

The position attitude information acquisition unit 201, the position attitude information storage unit 202, and the corresponding position identification unit 203 perform processing similar to that in the first embodiment.

As in the first embodiment, the height calculation unit 209 calculates a difference between the height of the virtual camera at the starting position and the height of the virtual camera at the current position, in the virtual space. Furthermore, the height calculation unit 209 may add a change in height of the imaging device 10 indicated by the position attitude information.

As in the first embodiment, the height correction unit 210 corrects the height of the imaging range A of the virtual camera, on the basis of the value calculated by the height calculation unit 209. Thereby, the height correction unit 210 sets the imaging range A of the virtual camera to a height according to the terrain in the virtual space. Then, the height correction unit 210 causes a correction storage unit 208b to store the corrected height of the imaging range A of the virtual camera.

A three-dimensional video generation unit 212b generates a three-dimensional video of the virtual space on the basis of the height of the imaging range A of the virtual camera stored in the correction storage unit 208b. In other words, the three-dimensional video generation unit 212b generates the three-dimensional video of the virtual space included in the imaging range A of the virtual camera at the height stored in the correction storage unit 208b by rendering or the like.

As described above, in an information processing system 1b according to the second embodiment, the three-dimensional video generation device 20b corrects the height of the imaging range A of the virtual camera according to the terrain in the virtual space. In other words, the three-dimensional video generation device 20b does not correct the inclination of the imaging range A of the virtual camera. Therefore, the camera operator is allowed to freely change the tilting of the virtual camera regardless of the terrain in the virtual space.

### [First Modification of Second Embodiment]

In the second embodiment, the height is corrected without correcting the attitude. In a first modification of the second embodiment, the tilting of the virtual camera in the virtual space is corrected on condition that the tilting of the attitude is less than a threshold.

Here, the camera operator greatly tilts the imaging device 10 so that the imaging target is within the imaging range A, in some cases. On the other hand, when the tilting of the attitude is less than the threshold, there is a high possibility that the imaging device 10 is not intentionally tilted. When the imaging device 10 is not intentionally tilted, it may be preferable to tilt the virtual camera according to the terrain in the virtual space. Therefore, in the first modification of the second embodiment, the tilting of the virtual camera in the virtual space is corrected on condition that the tilting of the imaging device 10 is less than the threshold.

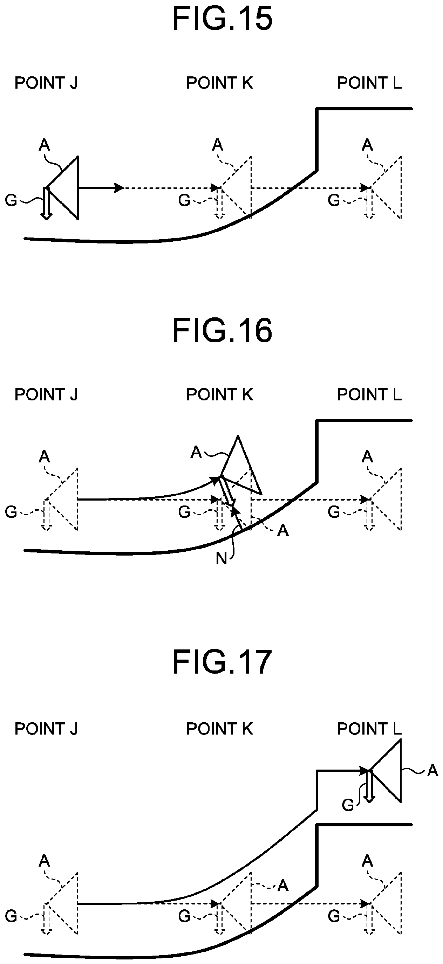

FIG. 15 is a diagram illustrating an example of a movement trajectory of the virtual camera. FIG. 16 is a diagram illustrating an example of the movement trajectory of the virtual camera. FIG. 17 is a diagram illustrating an example of the movement trajectory of the virtual camera. Furthermore, in FIGS. 15 to 17, it is assumed that the camera operator moves substantially horizontally in the real space. Furthermore, it is assumed that the camera operator is pointing the imaging device 10 in a substantially horizontal direction.

In FIGS. 15 to 17, a dotted line indicates a trajectory of movement of the imaging device 10 in the real space. On the other hand, a solid line indicates a trajectory of the movement of the virtual camera in the virtual space. At point J illustrated in FIG. 15, the inclination of the terrain in the virtual space is less than the threshold. Therefore, the attitude of the virtual camera is corrected. Furthermore, at point K illustrated in FIG. 16, the inclination of the terrain in the virtual space is less than the threshold. Therefore, the attitude of the virtual camera is corrected. Furthermore, at point L illustrated in FIG. 17, the inclination of the terrain in the virtual space is equal to or larger than the threshold. Therefore, the attitude of the virtual camera is not corrected. More specifically, there is a place between the point K and the point L where the inclination of the terrain in the virtual space is equal to or larger than the threshold. At this place, the attitude of the virtual camera is not corrected. Furthermore, the camera operator is pointing the imaging device 10 in the substantially horizontal direction. Therefore, at the place where the inclination of the terrain in the virtual space is equal to or larger than the threshold, the attitude of the virtual camera is not corrected, and thus, the virtual camera is directed in the substantially horizontal direction.

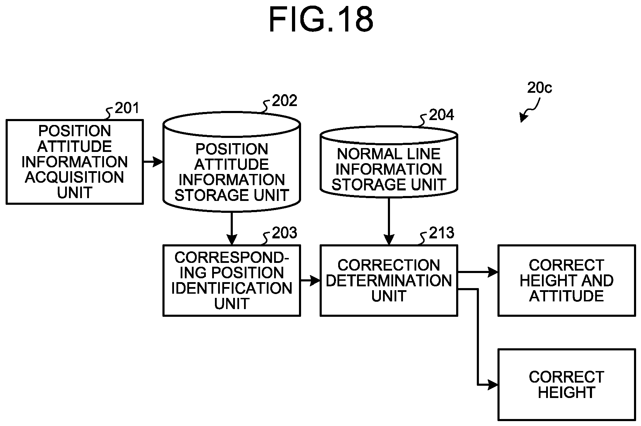

FIG. 18 is a diagram illustrating an example of a schematic configuration of a three-dimensional video generation device 20c according to the first modification of the second embodiment of the present disclosure.

The position attitude information acquisition unit 201 acquires the position attitude information from the imaging device 10. Then the position attitude information acquisition unit 201 causes the position attitude information storage unit 202 to store the acquired position attitude information.

The corresponding position identification unit 203 identifies the horizontal position and height in the virtual space corresponding to the position of the virtual space indicated by the position attitude information.

The normal line information storage unit 204 inputs the normal direction in the virtual space to a correction determination unit 213.

The correction determination unit 213 determines whether to correct the imaging range A of the virtual camera. Then, in a case where the correction determination unit 213 determines to perform correction, the attitude correction unit 207 or the height correction unit 210 corrects the imaging range A of the virtual camera. More specifically, the correction determination unit 213 corrects the inclination of the imaging range A of the virtual camera, on the basis of the gravity direction of the virtual camera in the virtual space and the normal direction indicated by the normal vector N of the terrain at the current position in the virtual space, when the angle between the gravity direction and the normal direction is less than the threshold. Here, the attitude of the virtual camera is determined on the basis of the attitude of the imaging device 10 in the real space. In other words, the correction determination unit 213 corrects the inclination of the imaging range A of the virtual camera on the basis of the gravity direction of the imaging device 10 in the real space and the normal direction indicated by the normal vector N of the terrain at the current position in the virtual space.

More specifically, on the basis of the gravity direction of the virtual camera in the virtual space and the normal direction indicated by the normal vector N of the terrain at the current position in the virtual space, the correction determination unit 213 calculates the angle between the gravity direction and the normal direction. Then, the correction determination unit 213 determines whether the calculated angle is equal to or larger than the threshold. When the calculated angle is less than the threshold, the correction determination unit 213 corrects the height and attitude of the imaging range A of the virtual camera. For example, the three-dimensional video generation device 20c causes each unit illustrated in FIG. 5 to correct the height and attitude of the imaging range A of the virtual camera.

On the other hand, when the angle formed is equal to or larger than the threshold, the correction determination unit 213 corrects the height of the imaging range A. In other words, the three-dimensional video generation device 20c does not correct the attitude of the imaging range A of the virtual camera. For example, the three-dimensional video generation device 20c causes each unit illustrated in FIG. 14 to correct the height of the imaging range A of the virtual camera, and does not correct the attitude.

As described above, in an information processing system 1c according to the first modification of the second embodiment, the three-dimensional video generation device 20c corrects the height of the imaging range A of the virtual camera, when the inclination of the terrain in the virtual space is less than the threshold. Therefore, the camera operator is allowed to capture a three-dimensional video according to the inclination of the terrain in the virtual space without tilting the imaging device 10, when the inclination of the terrain in the virtual space is less than the threshold.

### [Third Embodiment]

In the first embodiment, the position of the virtual camera in the virtual space is identified, on the basis of the position of the imaging device 10 in the real space. In a third embodiment, the position of the virtual camera in the virtual space is corrected, on the basis of, for example, a SLAM device 40 worn by the camera operator.

In the real space, the camera operator captures a video at a position where there is actually no ground by extending an arm or attaching an operation arm or the like, in some cases. For example, the camera operator captures a video as if by looking under a cliff, in some cases. In this case, an imaging position in the virtual space corresponding to the position of the imaging device 10 is under the cliff. Therefore, when the height of the virtual camera is determined according to the terrain of the imaging position, the virtual camera will fall from the cliff.

However, the imaging device 10 is actually held by the camera operator, and does not fall under the cliff. Therefore, in the third embodiment, the position of the virtual camera in the virtual space is corrected on the basis of the SLAM device 40.

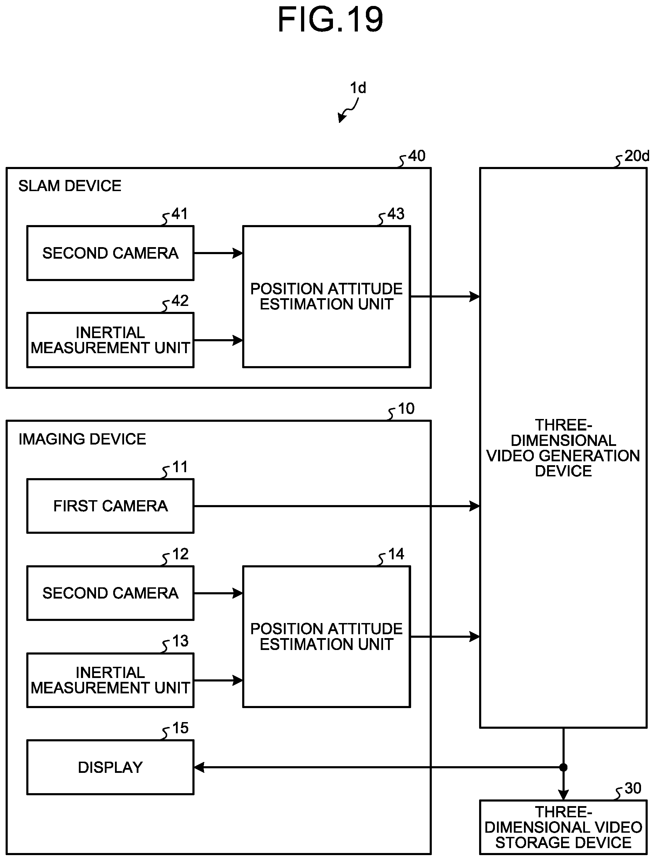

Here, FIG. 19 is a diagram illustrating an example of a configuration of an information processing system 1d according to the third embodiment of the present disclosure. The information processing system 1d includes the imaging device 10, the SLAM device 40, a three-dimensional video generation device 20d, and the three-dimensional video storage device 30.

The SLAM device 40 includes a second camera 41, an inertial measurement unit 42, and a position attitude estimation unit 43.

The second camera 41 is a camera that captures an image used for estimation of the self-position, attitude, and the like of the SLAM device 40. The second camera 41 generates a second camera image that is image data captured by the second camera 41.

The inertial measurement unit 42 is a device that includes various sensors measuring a motion state of the SLAM device 40. For example, the inertial measurement unit 42 measures angular velocity, acceleration, and the like. Then, the inertial measurement unit 42 generates IMU information including the angular velocity, the acceleration, and the like.

The position attitude estimation unit 43 estimates the self-position and attitude of the SLAM device 40, on the basis of map information indicating the environment around the SLAM device 40, the second camera image, and the IMU information. The self-position is information indicating a horizontal position and a height of the SLAM device 40. The attitude is information indicating the tilting of the SLAM device 40 represented by a yaw angle, a roll angle, and a pitch angle. Then, the position attitude estimation unit 43 generates correction information indicating the self-position and attitude of the SLAM device 40. The correction information is position information indicating the position of the SLAM device 40 in the real space and used to correct the position of the virtual camera. Note that the position attitude estimation unit 43 may recognize the position and attitude of the SLAM device 40 in the virtual space, on the basis of a movement distance, a movement direction, and the like of the SLAM device 40. Furthermore, the position attitude estimation unit 43 may estimate only the position of the position and attitude.

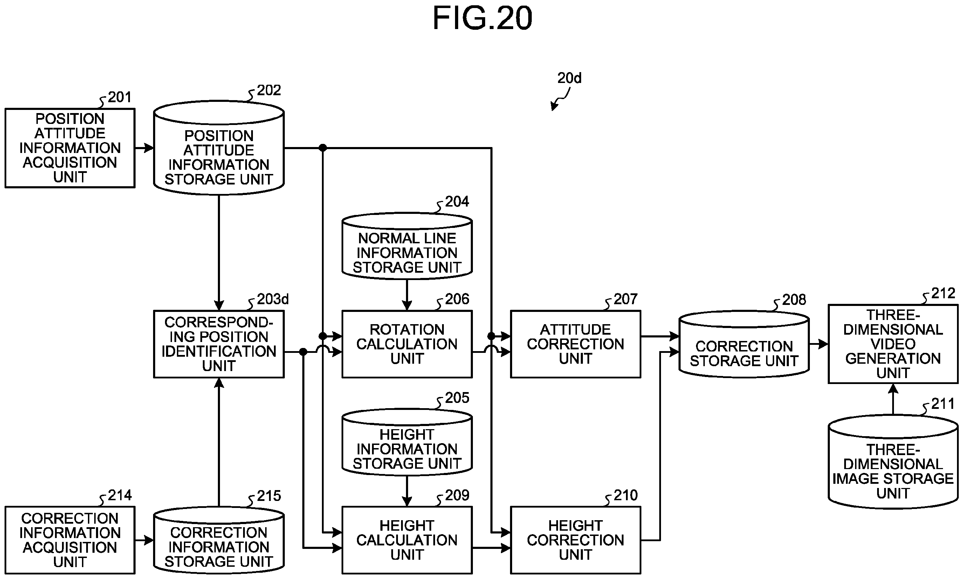

Next, the three-dimensional video generation device 20d according to the third embodiment will be described. Here, FIG. 20 is a diagram illustrating an example of a schematic configuration of the three-dimensional video generation device 20d according to the third embodiment of the present disclosure.

The three-dimensional video generation device 20d according to the third embodiment is different from that of the first embodiment in that a correction information acquisition unit 214 and a correction information storage unit 215 are included.

The correction information acquisition unit 214 acquires the correction information indicating the position of the SLAM device 40 in the real space.

The correction information storage unit 215 stores the correction information acquired from the SLAM device 40 by the correction information acquisition unit 214.

A corresponding position identification unit 203d identifies the current position of the virtual camera in the horizontal direction, on the basis of the position attitude information and the correction information. Here, in a case where the camera operator captures a video of an area under the cliff by extending his/her arm or attaching an operation arm or the like, a distance from the position of the imaging device 10 indicated by the position attitude information to the SLAM device 40 indicated by the correction information is increased. In such a case, the corresponding position identification unit 203d identifies the position of the virtual camera provided in the virtual space associated with the real space, on the basis of the correction information.

For example, when the distance from the position of the imaging device 10 indicated by the position attitude information to the SLAM device 40 indicated by the correction information is equal to or more than a threshold, the corresponding position identification unit 203d determines that the virtual camera is located at a position indicated by the correction information. Alternatively, the corresponding position identification unit 203d determines that the virtual camera is located at a position calculated on the basis of the position attitude information and the correction information. Alternatively, the position calculated on the basis of the correction information and the position of the imaging device 10 may be manually switched for use. Accordingly, the corresponding position identification unit 203d determines that the virtual camera is on the cliff, and therefore, the virtual camera is prevented from falling from the cliff.

The height calculation unit 209 calculates the height of the virtual camera at the current position identified by the corresponding position identification unit 203d. Furthermore, the height calculation unit 209 may add a change in height of the SLAM device 40 indicated by the position attitude information to the height in the virtual space at the position indicated by the correction information. This configuration makes it possible for the height calculation unit 209 to generate the three-dimensional video according to the change in height specified by the camera operator with the SLAM device 40.

As described above, in the information processing system 1d according to the third embodiment, the three-dimensional video generation device 20d identifies the current position of the virtual camera in the horizontal direction, on the basis of the position attitude information, and moreover, the correction information from the SLAM device 40. This configuration makes it possible for the three-dimensional video generation device 20d to prevent the virtual camera from falling from the cliff or the like in the virtual space due to correction of the virtual camera.

### [Fourth Embodiment]

A fourth embodiment is different from the first embodiment in that a reference height of an imaging device 10e is input.

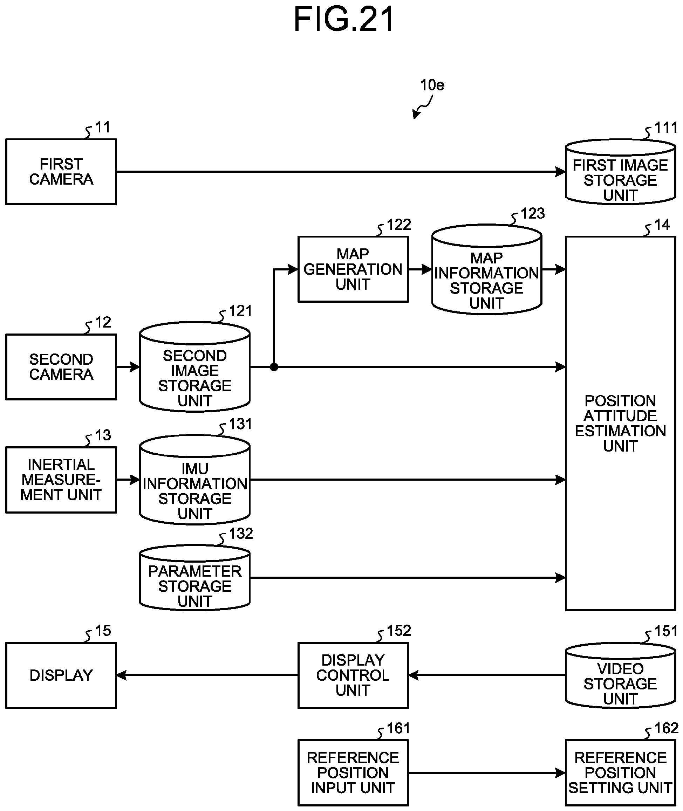

Here, FIG. 21 is a diagram illustrating an example of a configuration of an imaging device 10e according to the fourth embodiment of the present disclosure. When the camera operator changes the height of the imaging device 10e, it is preferable to change the height of the virtual camera in synchronization with the imaging device 10e. Therefore, the imaging device 10e according to the fourth embodiment includes a reference position input unit 161 that receives an input of the reference height, and a reference position setting unit 162.

The reference position input unit 161 receives an input of a numerical value indicating the height from the imaging device 10e to the ground. For example, the reference position input unit 161 receives a numerical value indicating the body height of the camera operator.

The reference position setting unit 162 sets a reference position at which the reference height of the imaging device 10e is indicated. In other words, the reference position input unit 161 sets the reference position on the basis of the numerical values received by the reference position input unit 161.

As described above, in an information processing system 1e according to the fourth embodiment, the imaging device 10e is configured to set the reference height.

### [First Modification of Fourth Embodiment]

In the fourth embodiment, an input specifying a numerical value indicating a reference height is received. In a first modification of the fourth embodiment, a height from an imaging device 10f to the ground is measured.

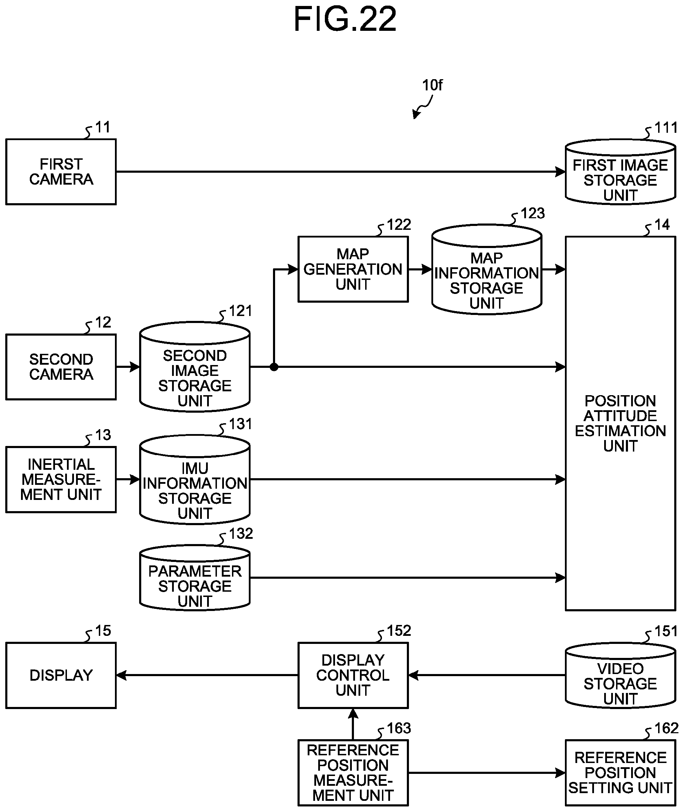

Here, FIG. 22 is a diagram illustrating an example of a configuration of the imaging device 10f according to the first modification of the fourth embodiment of the present disclosure. The imaging device 10f according to the first modification of the fourth embodiment includes a reference position measurement unit 163 and the reference position setting unit 162.

The reference position measurement unit 163 measures the height from the imaging device 10f to the ground. The reference position measurement unit 163 measures the height from the imaging device 10f to the ground on the basis of, for example, a second camera image. Furthermore, in a case where the imaging device 10f includes a stereo camera and a time of flight (TOF) sensor, the reference position measurement unit 163 may measure the height from the imaging device 10f to the ground on the basis of information obtained from the stereo camera and the TOF sensor. Then, the reference position setting unit 162 sets the reference position on the basis of the height measured by the reference position measurement unit 163.

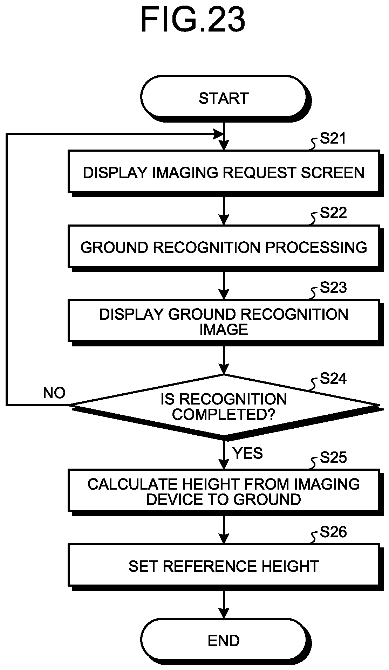

Next, a reference height setting process performed by the imaging device 10f according to the first modification of the fourth embodiment will be described. FIG. 23 is a flowchart illustrating an example of the reference height setting process according to the first modification of the fourth embodiment.

The display control unit 152 displays, on the display 15, an imaging request screen requesting the camera operator to capture a video of the ground on which the camera operator is currently standing (Step S21).

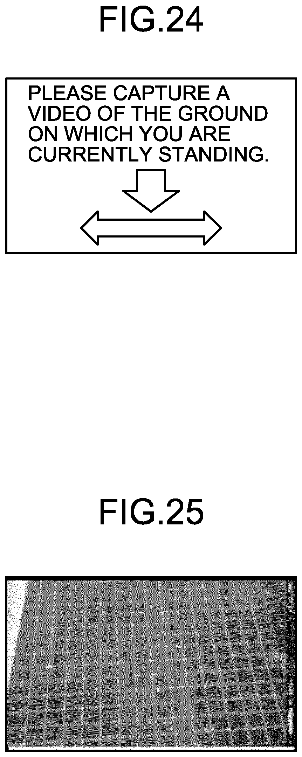

Here, FIG. 24 is a diagram illustrating an example of an imaging request screen according to the first modification of the fourth embodiment. As illustrated in FIG. 24, the display control unit 152 displays a message "Please capture a video of the ground on which you are currently standing." to request capturing a video of the ground. Furthermore, as illustrated in FIG. 24, an arrow directed to the left and right is displayed to request capturing the video while swinging the imaging device 10f left and right.

The reference position measurement unit 163 performs ground recognition processing for recognition of the ground, on the basis of the second camera image or the like captured by the second camera 12 (Step S22).

The display control unit 152 displays, on the display 15, a ground recognition image indicating a portion that is recognized as the ground by the reference position measurement unit 163 (Step S23).

Here, FIG. 25 is a diagram illustrating an example of a ground recognition screen according to the first modification of the fourth embodiment. The ground recognition screen is a screen that identifiably displays a portion recognized as the ground by the reference position measurement unit 163. As illustrated in FIG. 25, in the ground recognition screen, a stripe pattern is applied to the portion recognized as the ground. This configuration makes it possible for the camera operator to confirm whether the imaging device 10f appropriately recognizes the ground.

The reference position measurement unit 163 determines whether the recognition of the ground is completed (Step S24). When the recognition of the ground is not completed (Step S24; No), the imaging device 10f proceeds to Step S21 and continues the recognition of the ground.

When the recognition of the ground is completed (Step S24; Yes), the reference position measurement unit 163 calculates the height from the imaging device 10f to the recognized ground (Step S25). The reference position setting unit 162 sets the calculated height as the reference height (Step S26).

As described above, the imaging device 10f finishes the reference height setting process.

As described above, in an information processing system 1f according to the first modification of the fourth embodiment, the imaging device 10f measures the reference height. Then, the imaging device 10f is configured to set the measured height as the reference height. Therefore, the camera operator is allowed to readily set the reference height.

### [Fifth Embodiment]

In a fifth embodiment, a three-dimensional video to which an image indicating the attitude of the virtual camera is added is caused to be displayed.

In the first embodiment, the attitude of the virtual camera is corrected according to the terrain in the virtual space. In other words, the attitude of the imaging device 10f differs from the attitude of the virtual camera. In some cases, this configuration may make the camera operator not understand the attitude of the virtual camera, that is, the gravity direction of the virtual camera. Therefore, in a three-dimensional video generation device 20g, the display 15 of the imaging device 10f is caused to display the gravity direction of the virtual camera.

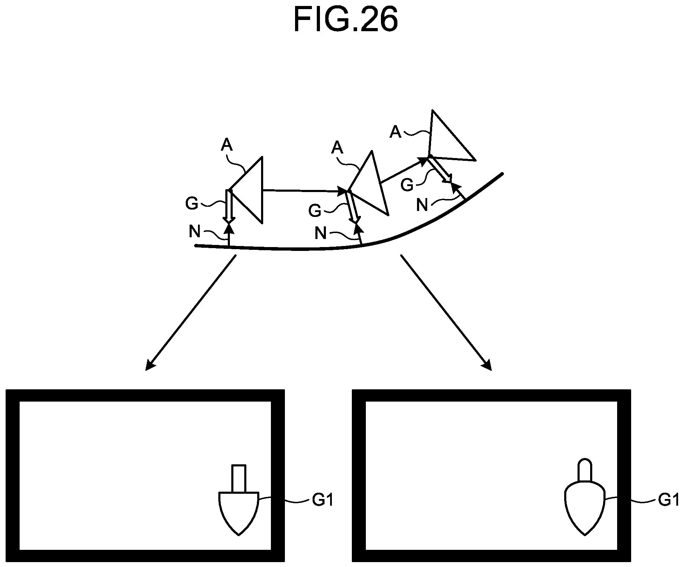

Here, FIG. 26 is a diagram illustrating an example of a gravity direction image G1 according to the fifth embodiment. The display control unit 152 causes to display the gravity direction of the virtual camera. In other words, the display control unit 152 displays the gravity direction on a screen having a video generated by a three-dimensional video generation unit 212g. Specifically, the display control unit 152 displays the gravity direction image G1 indicating the gravity direction of the virtual camera, on the display 15.

As illustrated in FIG. 26, the three-dimensional video generation device 20g tilts the virtual camera according to the terrain in the virtual space, and thus, the imaging range A of the virtual camera is also tilted. Then, the three-dimensional video generation device 20g tilts the gravity direction image G1 according to the inclination of the imaging range A of the virtual camera. Here, the gravity direction image G1 indicates the gravity direction of the virtual camera. Therefore, the gravity direction image G1 makes the camera operator grasp the attitude of the virtual camera. Note that, in FIG. 26, the gravity direction image G1 indicates the gravity direction by an arrow, but the gravity direction may be indicated by a method using other than the arrow. For example, the gravity direction image G1 may be a figure other than the arrow, may be a character or a number, or may be another image.

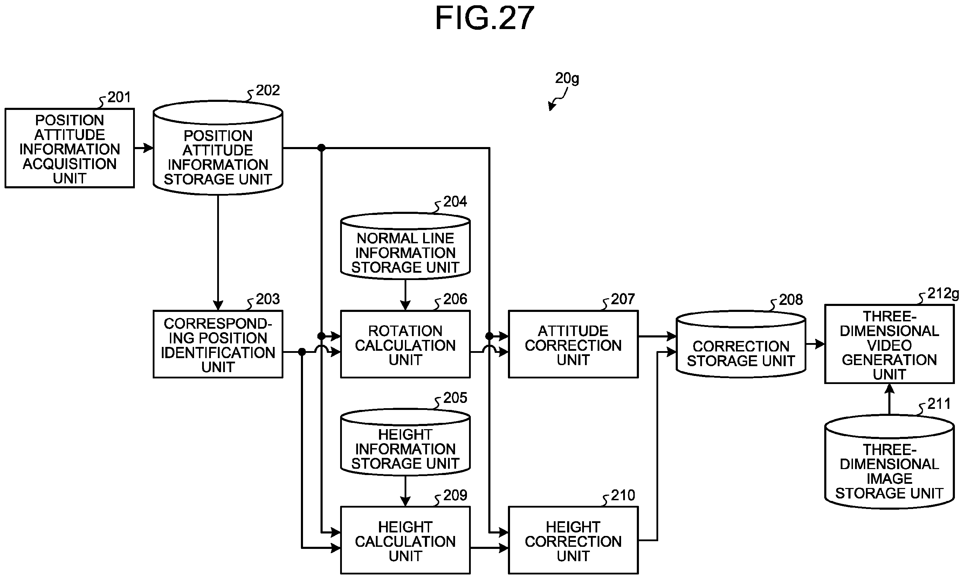

Here, FIG. 27 is a diagram illustrating an example of a configuration of the three-dimensional video generation device 20g according to the fifth embodiment of the present disclosure. The three-dimensional video generation unit 212g of the three-dimensional video generation device 20g adds the gravity direction image G1 indicating the gravity method of the virtual camera to a generated three-dimensional video, on the basis of the attitude of the virtual camera. Then, the three-dimensional video generation device 20g transmits the three-dimensional video to which the gravity direction image G1 is added, to the imaging device 10f. The display control unit 152 of the imaging device 10f displays the three-dimensional video received, on the display 15. Therefore, the imaging device 10f is allowed to display the video to which the gravity direction image G1 is added.

As described above, in an information processing system 1g according to the fifth embodiment, the imaging device 10f is configured to display the gravity method of the virtual camera. Therefore, the camera operator is allowed to recognize the gravity method of the virtual camera.

### [Sixth Embodiment]

In a sixth embodiment, an omnidirectional camera is adopted as the virtual camera.

When the gravity direction of the imaging device 10 is different from the gravity direction of the virtual camera, it is difficult for the camera operator to intuitively take a correct posture (rotation). Therefore, a three-dimensional video generation device 20h generates an omnidirectional video so that the attitude of the virtual camera can be adjusted later in editing.

Here, the omnidirectional camera is a camera that captures all directions through 360 degrees. In other words, the virtual camera has the imaging range A in all directions. The three-dimensional video generation device 20h generates an omnidirectional three-dimensional video of the virtual space. Therefore, the three-dimensional video generation device 20h is configured to extract a video having a desired attitude after completion of video capturing.

As described above, in an information processing system 1h according to the sixth embodiment, the three-dimensional video generation device 20h is configured to generate the omnidirectional three-dimensional video. Therefore, after the three-dimensional video is generated, the camera operator or the like can acquire a three-dimensional video captured at any angle as necessary.

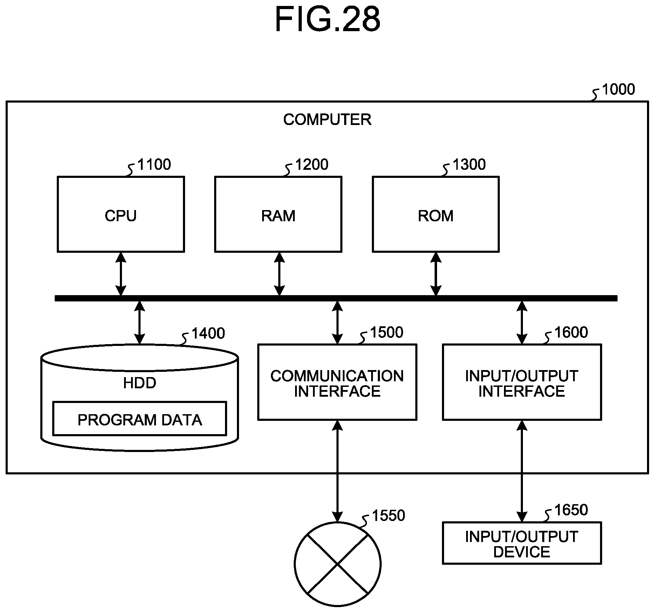

The imaging devices 10, 10e, and 10f, the three-dimensional video generation devices 20, 20a, 20b, 20c, 20d, 20g, and 20h, the three-dimensional video storage device 30, and the SLAM device 40 that implement the information processing systems 1, 1a, 1b, 1c, 1d, 1e, 1f, 1g, and 1h according to the embodiments described above are implemented by, for example, a computer 1000 having a configuration as illustrated in FIG. 28. FIG. 28 is a block diagram illustrating a hardware configuration of the computer according to an embodiment of the present disclosure.

As illustrated in FIG. 28, the computer 1000 includes a CPU 1100, a RAM 1200, a read only memory (ROM) 1300, a hard disk drive (HDD) 1400, a communication interface 1500, and an input/output interface 1600. The component units of the computer 1000 are connected by a bus 1050.

The CPU 1100 is operated on the basis of a program stored in the ROM 1300 or the HDD 1400 and controls each component unit. For example, the CPU 1100 deploys the programs stored in the ROM 1300 or the HDD 1400 to the RAM 1200 and executes processing corresponding to various programs.

The ROM 1300 stores a boot program such as a basic input output system (BIOS) executed by the CPU 1100 when the computer 1000 is booted, a program depending on the hardware of the computer 1000, and the like.

The HDD 1400 is a computer-readable recording medium that non-transitorily records the programs executed by the CPU 1100, data used by the programs, and the like. Specifically, the HDD 1400 is a recording medium that records an image processing program according to the present disclosure, the image processing program being an example of program data 1450.

The communication interface 1500 is an interface for connecting the computer 1000 to an external network 1550 (e.g., the Internet). For example, the CPU 1100 receives data from another device or transmits data generated by the CPU 1100 to another device, via the communication interface 1500.

The input/output interface 1600 is an interface for connecting an input/output device 1650 and the computer 1000. For example, the CPU 1100 receives data from an input device such as a keyboard or mouse via the input/output interface 1600. In addition, the CPU 1100 transmits data to an output device such as a display, speaker, or printer via the input/output interface 1600. Furthermore, the input/output interface 1600 may function as a media interface that reads a program or the like recorded on a predetermined recording medium. The medium includes, for example, an optical recording medium such as a digital versatile disc (DVD) and phase change rewritable disk (PD), a magneto-optical recording medium such as a magneto-optical disk (MO), a tape medium, a magnetic recording medium, a semiconductor memory, or the like.

For example, when the computer 1000 functions as a server according to an embodiment described above, the CPU 1100 of the computer 1000 executes a program loaded on the RAM 1200 to implement at least one of the functions of the component units described above. In addition, the HDD 1400 stores the programs according to the present disclosure or data stored in at least one of the storage units described above. Note that the CPU 1100 executes the program data 1450 read from the HDD 1400, but in another example, the CPU 1100 may acquire programs from another device via the external network 1550.

Although the embodiments of the present disclosure have been described above, the technical scope of the present disclosure is not limited to the embodiments described above and various changes can be made without departing from the spirit and scope of the present disclosure. Moreover, the component elements of different embodiments and modifications may be suitably combined with each other.

Furthermore, the effects in the embodiments described herein are merely examples, the present invention is not limited to these effects, and other effects may also be provided.

Furthermore, each of the embodiments described above may be used alone, or may be used in combination with another embodiment.

### (Effects)

The information processing systems 1, 1a, 1b, 1c, 1d, 1e, 1f, 1g, and 1h each include the position attitude information acquisition unit 201, the corresponding position identification unit 203, the attitude correction unit 207, the height correction unit 210, and the three-dimensional video generation unit 212. A position attitude information acquisition unit 201 acquires the position attitude information indicating the position and attitude of the imaging device 10 in the real space. The corresponding position identification unit 203 identifies the position of the virtual camera provided in the virtual space associated with the real space, on the basis of the position attitude information. An attitude correction unit 207 and a height correction unit 210 correct the imaging range A of the virtual camera at the position identified by the corresponding position identification unit 203, on the basis of the terrain in the virtual space. A three-dimensional video generation unit 212 generates a video of the virtual space corresponding to the imaging range A of the virtual camera. As described above, each of the information processing systems 1, 1a, 1b, 1c, 1d, 1e, 1f, 1g, and 1h corrects the imaging range A of the virtual camera on the basis of the terrain in the virtual space, thus, enabling the generation of the three-dimensional video according to the terrain in the virtual space.

The height correction unit 210 corrects the height of the imaging range A of the virtual camera. This configuration makes it possible for the information processing system 1b to generate the three-dimensional video according to the height of the terrain in the virtual space.

The height correction unit 210 adds a change in height of the terrain in the virtual space to correct the height of the imaging range A of the virtual camera. This configuration makes it possible for the information processing system 1 to generate the three-dimensional video according to the height of the terrain in the virtual space.

The attitude correction unit 207 corrects the inclination of the imaging range A of the virtual camera. This configuration makes it possible for the information processing system 1 to generate the three-dimensional video according to the inclination of the terrain in the virtual space.

The attitude correction unit 207 corrects the imaging range A of the virtual camera to have inclination at which the gravity direction of the virtual camera is parallel to the normal direction normal to the terrain in the virtual space. This configuration makes it possible for the information processing system 1 to generate the three-dimensional video according to the inclination of the terrain in the virtual space.

The attitude correction unit 207 and the height correction unit 210 correct the position and attitude of the virtual camera to correct the imaging range A of the virtual camera. Therefore, the information processing system 1 is configured to correct the position and attitude of the virtual camera to generate the three-dimensional video according to the terrain in the virtual space.

The attitude correction unit 207 and the height correction unit 210 correct the position in the virtual space and the attitude of the virtual space to correct the imaging range A of the virtual camera. This configuration makes it possible for the information processing system 1a to correct the position in and the attitude of the virtual space to generate the three-dimensional video according to the terrain in the virtual space.

The correction determination unit 213 determines whether to correct the imaging range A of the virtual camera. In a case where the correction determination unit 213 determines to perform correction, the attitude correction unit 207 or the height correction unit 210 corrects the imaging range A of the virtual camera. This configuration makes it possible for the information processing system 1c to generate the three-dimensional video, after determining whether to make a correction according to the terrain in the virtual space. In other words, the information processing system 1c is configured to make a correction according to the terrain in the virtual space only when necessary.

The correction determination unit 213 corrects the inclination of the imaging range A of the virtual camera, on the basis of the gravity direction of the first device in the real space and the normal direction normal to the terrain at the current position in the virtual space, when the angle between the gravity direction and the normal direction is less than the threshold. This configuration makes it possible for the information processing system 1c to make a correction according to the terrain in the virtual space, when the imaging device 10 cannot be appropriately tilted.

The correction information acquisition unit 214 acquires the correction information indicating the position of the SLAM device 40 in the real space. The corresponding position identification unit 203d identifies the position of the virtual camera, on the basis of the position attitude information and the correction information. This configuration makes it possible for the information processing system 1d to correct the position of the virtual camera, on the basis of the correction information indicating the position of the SLAM device 40. Therefore, in a case where the information processing system 1d generates the three-dimensional video as if looking under the cliff from above the cliff, the information processing system 1d is allowed to prevent the virtual camera from falling from the cliff due to correction of the position on the basis of the correction information, even when the virtual camera is positioned above the cliff.

The reference position setting unit 162 sets a reference position at which the reference height of the imaging device 10e is indicated. This configuration makes it possible for the information processing system 1e to set the reference height of the imaging device 10e.

The reference position input unit 161 receives an input of a numerical value indicating the height from the imaging device 10e to the ground. The reference position setting unit 162 sets the reference position, on the basis of the numerical value received by the reference position input unit 161. This configuration makes it possible for the information processing system 1e to set the input value as the reference height of the imaging device 10e.

The reference position measurement unit 163 measures the height from the imaging device 10f to the ground. The reference position setting unit 162 sets the reference position, on the basis of the height measured by the reference position measurement unit 163. This configuration makes it possible for the information processing system 1f to set the measured value as the reference height of the imaging device 10f.

The display control unit 152 causes to display the gravity direction of the virtual camera. This configuration makes it possible for the information processing system 1g to cause the camera operator to recognize the gravity direction of the virtual camera.

The display control unit 152 displays the gravity direction on the screen having the video generated by the three-dimensional video generation unit 212g. This configuration makes it possible for the information processing system 1g to cause the camera operator to recognize the gravity direction of the virtual camera.

The virtual camera has the imaging range A in all directions. The three-dimensional video generation unit 212g generates the omnidirectional three-dimensional video of the virtual space. This configuration makes it possible for the information processing system 1h to generate the omnidirectional three-dimensional video. Therefore, after the three-dimensional video is generated, the camera operator or the like can acquire a three-dimensional video captured at any angle as necessary.

Note that the effects described herein are merely examples, and the present invention is not limited to these effects and may have other effects.

Additionally, the present technology may also be configured as below.
(1) An information processing system comprising:
   a first acquisition unit that acquires position attitude information indicating a position and attitude of a first device in a real space;
   an identification unit that identifies a position of a virtual camera provided in a virtual space associated with the real space, based on the position attitude information;
   a correction unit that corrects an imaging range of the camera in the position and an attitude, identified by the identification unit, based on a terrain in the virtual space; and
   a video generation unit that generates a video of the virtual space corresponding to the imaging range.
(2) The information processing system according to (1), wherein
   the correction unit corrects a height of the imaging range.
(3) The information processing system according to (2), wherein
   the correction unit adds a change in height of the terrain in the virtual space to correct the height of the imaging range.
(4) The information processing system according to any one of (1) to (3), wherein
   the correction unit corrects inclination of the imaging range.
(5) The information processing system according to (4), wherein
   the correction unit corrects the imaging range to have inclination at which a gravity direction of the camera is parallel to a normal direction normal to the terrain in the virtual space.
(6) The information processing system according to any one of (1) to (5), wherein
   the correction unit corrects the position and attitude of the camera to correct the imaging range.
(7) The information processing system according to any one of (1) to (5), wherein
   the correction unit corrects a position and an attitude of the virtual space to correct the imaging range.
(8) The information processing system according to any one of (1) to (7), further comprising
   a determination unit that determines whether to correct the imaging range,
   wherein the correction unit corrects the imaging range when the determination unit determines to make a correction.
(9) The information processing system according to (8), wherein
   the determination unit corrects inclination of the imaging range, based on the terrain in the virtual space, when inclination of the terrain in the virtual space is less than a threshold.
(10) The information processing system according to any one of (1) to (7), further comprising
   a second acquisition unit that acquires position information indicating a position of a second device in the real space,
   wherein the identification unit identifies the position of the camera, based on the position attitude information and the position information.
(11) The information processing system according to any one of (1) to (10), further comprising
   a setting unit that sets a reference position indicating a reference height of the first device.
(12) The information processing system according to (11), further comprising
   an input unit that receives an input of a numerical value indicating a height from the first device to the ground,
   wherein the setting unit sets the reference position based on the numerical value received by the input unit.
(13) The information processing system according to (11), further comprising
   a measurement unit that measures a height from the first device to the ground,
   wherein the setting unit sets the reference position based on the height measured by the measurement unit.
(14) The information processing system according to any one of (1) to (13), further comprising
   a display control unit that displays a gravity direction of the camera.
(15) The information processing system according to (14), wherein
   the display control unit displays the gravity direction on a screen having the video generated by the video generation unit.
(16) The information processing system according to any one of (1) to (15), wherein
   the camera has the imaging range in all directions, and
   the video generation unit generates an omnidirectional video of the virtual space.
(17) An information processing method comprising:
   acquiring position attitude information indicating a position and attitude of a first device in a real space;
   identifying a position of a virtual camera provided in a virtual space associated with the real space, based on the position attitude information;
   correcting an imaging range of the camera in the position and an attitude identified, based on a terrain in the virtual space; and
   generating a video of the virtual space corresponding to the imaging range.
(18) A program for causing a computer to function as:
   a first acquisition unit that acquires position attitude information indicating a position and attitude of a first device in a real space;
   an identification unit that identifies a position of a virtual camera provided in a virtual space associated with the real space, based on the position attitude information;
   a correction unit that corrects an imaging range of the camera in the position and an attitude, identified by the identification unit, based on a terrain in the virtual space; and
   a video generation unit that generates a video of the virtual space corresponding to the imaging range.

### Reference Signs List

1, 1a, 1b, 1c, 1d, 1e, 1f, 1g, 1h INFORMATION PROCESSING SYSTEM
10, 10e, 10f IMAGING DEVICE
20, 20a, 20b, 20c, 20d, 20g, 20h THREE-DIMENSIONAL VIDEO GENERATION DEVICE
30 THREE-DIMENSIONAL VIDEO STORAGE DEVICE
40 SLAM DEVICE
152 DISPLAY CONTROL UNIT
161 REFERENCE POSITION INPUT UNIT
162 REFERENCE POSITION SETTING UNIT
163 REFERENCE POSITION MEASUREMENT UNIT
201 POSITION ATTITUDE INFORMATION ACQUISITION UNIT
202 POSITION ATTITUDE INFORMATION STORAGE UNIT
203, 203d CORRESPONDING POSITION IDENTIFICATION UNIT
204 NORMAL LINE INFORMATION STORAGE UNIT
205 HEIGHT INFORMATION STORAGE UNIT
206 ROTATION CALCULATION UNIT
207, 207a ATTITUDE CORRECTION UNIT
208, 208b CORRECTION STORAGE UNIT
209 HEIGHT CALCULATION UNIT
210, 210a HEIGHT CORRECTION UNIT
211 THREE-DIMENSIONAL IMAGE STORAGE UNIT
212, 212b, 212g THREE-DIMENSIONAL VIDEO GENERATION UNIT
213 CORRECTION DETERMINATION UNIT
214 CORRECTION INFORMATION ACQUISITION UNIT
215 CORRECTION INFORMATION STORAGE UNIT
A IMAGING RANGE
G GRAVITY VECTOR
N NORMAL VECTOR

## Claims

1. An information processing system comprising:
a first acquisition unit that acquires position attitude information indicating a position and attitude of a first device in a real space;
an identification unit that identifies a position of a virtual camera provided in a virtual space associated with the real space, based on the position attitude information;
a correction unit that corrects an imaging range of the camera in the position and an attitude, identified by the identification unit, based on a terrain in the virtual space; and
a video generation unit that generates a video of the virtual space corresponding to the imaging range.

2. The information processing system according to claim 1, wherein
the correction unit corrects a height of the imaging range.

3. The information processing system according to claim 2, wherein
the correction unit adds a change in height of the terrain in the virtual space to correct the height of the imaging range.

4. The information processing system according to claim 1, wherein
the correction unit corrects inclination of the imaging range.

5. The information processing system according to claim 4, wherein
the correction unit corrects the imaging range to have inclination at which a gravity direction of the camera is parallel to a normal direction normal to the terrain in the virtual space.

6. The information processing system according to claim 1, wherein
the correction unit corrects the position and attitude of the camera to correct the imaging range.

7. The information processing system according to claim 1, wherein
the correction unit corrects a position and an attitude of the virtual space to correct the imaging range.

8. The information processing system according to claim 1, further comprising
a determination unit that determines whether to correct the imaging range,
wherein the correction unit corrects the imaging range when the determination unit determines to make a correction.

9. The information processing system according to claim 8, wherein
the determination unit corrects inclination of the imaging range, based on the terrain in the virtual space, when inclination of the terrain in the virtual space is less than a threshold.

10. The information processing system according to claim 1, further comprising
a second acquisition unit that acquires position information indicating a position of a second device in the real space,
wherein the identification unit identifies the position of the camera, based on the position attitude information and the position information.

11. The information processing system according to claim 1, further comprising
a setting unit that sets a reference position indicating a reference height of the first device.

12. The information processing system according to claim 11, further comprising
an input unit that receives an input of a numerical value indicating a height from the first device to the ground,
wherein the setting unit sets the reference position based on the numerical value received by the input unit.

13. The information processing system according to claim 11, further comprising
a measurement unit that measures a height from the first device to the ground,
wherein the setting unit sets the reference position based on the height measured by the measurement unit.

14. The information processing system according to claim 1, further comprising
a display control unit that displays a gravity direction of the camera.

15. The information processing system according to claim 14, wherein
the display control unit displays the gravity direction on a screen having the video generated by the video generation unit.

16. The information processing system according to claim 1, wherein
the camera has the imaging range in all directions, and
the video generation unit generates an omnidirectional video of the virtual space.

17. An information processing method comprising:
acquiring position attitude information indicating a position and attitude of a first device in a real space;
identifying a position of a virtual camera provided in a virtual space associated with the real space, based on the position attitude information;
correcting an imaging range of the camera in the position and an attitude identified, based on a terrain in the virtual space; and
generating a video of the virtual space corresponding to the imaging range.

18. A program for causing a computer to function as:
a first acquisition unit that acquires position attitude information indicating a position and attitude of a first device in a real space;
an identification unit that identifies a position of a virtual camera provided in a virtual space associated with the real space, based on the position attitude information;
a correction unit that corrects an imaging range of the camera in the position and an attitude, identified by the identification unit, based on a terrain in the virtual space; and
a video generation unit that generates a video of the virtual space corresponding to the imaging range.
